# EUROPEAN PATENT SPECIFICATION

(11) **EP 3 892 594 B1**
(45) Date of publication and mention of the grant of the patent: **23.08.2023**
(21) Application number: 21167193.8
(22) Date of filing: 07.04.2021
(51) Int. Cl.: C03C 4/00, C03C 12/00, C03C 23/00

(54) **PROCESS FOR PRODUCING GLASS POWDER AND PRODUCTS THEREOF**
VERFAHREN ZUR HERSTELLUNG VON GLASPULVER UND PRODUKTE DARAUS
PROCÉDÉ DE PRODUCTION DE POUDRE DE VERRE ET PRODUITS ASSOCIÉS

(30) Priority: 07.04.2020 PT 2020116238
(43) Date of publication of application: 13.10.2021
(73) Proprietor: Universidade de Aveiro, 3810-193 Aveiro (PT)
(72) Inventor: PULLAR, ROBERT C, 4400-129 VILA NOVA DE GAIA (PT); BEN ARFA, BASAM ABOBAKER, 4470-048 MAIA (PT)
(74) Representative: Patentree

(56) References cited:
- CN-A- 107 352 807
- BEN-ARFA BASAM A.E. ET AL: "Clove and cinnamon: Novel anti-oxidant fuels for preparing magnetic iron oxide particles by the sol-gel auto-ignition method", JOURNAL OF ALLOYS AND COMPOUNDS, vol. 786, 1 May 2019 (2019-05-01), pages 71-76, XP055835066, CH ISSN: 0925-8388, DOI: 10.1016/j.jallcom.2019.01.306 Retrieved from the Internet: URL:https://www.sciencedirect.com/science/ article/pii/S0925838819303329/pdfft?md5=7e dc795e64f7e5064736c47c97db373e&pid=1-s2.0- S0925838819303329-main.pdf>
- BEN-ARFA BASAM A.E. ET AL: "Enhanced bioactivity of a rapidly-dried sol-gel derived quaternary bioglass", MATERIALS SCIENCE AND ENGINEERING C, vol. 91, 1 May 2018 (2018-05-01), pages 36-43, XP055801811, CH ISSN: 0928-4931, DOI: 10.1016/j.msec.2018.05.016
- ARVIND VARMA ET AL: "Solution Combustion Synthesis of Nanoscale Materials", CHEMICAL REVIEWS, vol. 116, no. 23, 14 December 2016 (2016-12-14), pages 14493-14586, XP055357328, US ISSN: 0009-2665, DOI: 10.1021/acs.chemrev.6b00279

## Description

### TECHNICAL DOMAIN

The present invention relates to a process for producing glass powder and to products comprising said powders.

This process proposes a single step of auto-combustion allowing in most of the cases to avoid a further step of calcination. The glass powders thus obtained present high porosity and biocompatibility, which is a desired property for use in bioactive glass powders applications.

The present invention is in the technical domain of glass manufacturing in particular of glass powder production more preferably bioglass production.

### PRIOR ART

Melt-quenching and sol-gel are the common methods used in glass synthesis. Homogenising, calcination, melting, quenching, drying, and milling are required steps to produce glass powder by melt-quenching technique. Long-time (days to weeks) for aging and drying steps followed by calcination to eliminate the by-products are needed in Sol-Gel process synthesis route.

Bioglass^{®} BG is a silica-based glass synthesised in quaternary system (Si-Ca-Na-P), usually prepared by the traditional melt-quenching technique.

Bioactive glasses (BAG) with different compositions are usually biodegradable. When they come in contact with biological fluids, they elicit special responses leading to the formation of a bone-like layer of hydroxyapatite (HAp) at its surface.

HAp provides strong bonding between BAG implant and the host living tissues. Besides being non-cytotoxic and either bioactive or resorbable, modern biomaterials are aimed at adding other features to stimulate gene activation and enhance their performances in vitro and in vivo, including: (i) Non-genotoxicity (causing no damage to genes within a cell or DNA mutations); (ii) Osteoconductivity (bone readily grows on its surface); (iii) Osteoinduction (ability to recruit immature cells and to stimulate them towards developing into pre-osteoblasts, essential in any bone healing process); (iv) Osseo integration (establish a stable implant anchorage through its direct bone-to-implant contact).

Bioactive glasses and glass ceramics have gained particular interest in recent decades. They show superior bioactivity properties than bioceramics. The major advantages of bioactive glasses over bioceramics are: i) higher capability for bone re-generation; b) the possibility to provoke gene activation; c) they bond firmly to the bones in a faster manner than bioceramics. Moreover, bioactive glasses offer other advantages in the treatment of many disorders of several biological systems, and proved to help resume normal function, such as: osteomyelitis (destructive bony lesions); treating dentin hypersensitivity; repairing injured cardiac & pulmonary tissues; treatment of aneurysmal bone cysts (bone tumours).

Bioactive glasses are synthesised mainly by two methods; sol-gel and melt-quenching methods.

### i) Melt quenching technique

In the melt quenching technique, glass is obtained by fusing precursors such as oxides or carbonates at an elevated temperature (over 1500 °C) . To inhibit crystallisation, the melt is quenched in cold water to obtain a frit glass or cast to obtain bulk glasses.

### ii) Sol-gel technique

In the sol-gel technique, a mixture of the precursor solution (alkoxides and/or metal salts) is kept under stirring for a certain interval of time, until the hydrolysis and condensation process is completed and a clear sol is obtained, followed by aging, drying and calcination to form a glass powder or monolithic shapes.

### Sol-gel glass

The synthesis of silicate glasses by the sol-gel method involves the hydrolysis and condensation process of silicon alkoxide (usually tetra-ethyl ortho-silicate, TEOS, C₈H₂₀O₄Si), in water.

The sol-gel method provides numerous advantages over the conventional melt quenching techniquesuch as : (i) a molecular-level mixing of the batch components which enhance the homogeneity of the glasses; (ii) it can produce compositions unattainable by the melt-quenching method; sol-gel requires lower processing temperatures that prevent preferential volatilisation of certain components such as phosphorus; (iii) for the same composition, sol-gel glasses exhibit higher specific surface area (SSA) and lower network connectivity than those produced by the melt quenching method, which leads to higher dissolution rates and higher bioactivity.

### Effects of precursor and processing parameter on sol-gel derived glasses

It is well known that alkoxides are often used as precursors for oxides in sol-gel synthesis. The problems are the unavailability of some metal alkoxides, and/or the complexity in dealing with some alkoxides, as in the case of group I and II elements where the alkoxides are often air-sensitive, are sometimes in the solid state, can have unreliable purity, and they do not dissolve easily. The alternative to overcome this problem is by using organic or inorganic acid salts.
*i) Organic acid salts* have the potential to be used as precursors, as in the case of acetates and citrates. The disadvantages of using acetate metal salts are: (a) the carbonaceous residues in the final products; (b) the high pH of the solution, which may lead precipitation and to a fast gelation process; (c) the large amount of acid required to promote hydrolysis, which tends to remain as residues in the final product and need elevated temperatures to be eliminated.
*ii) Inorganic acid salts* are the most commonly used in sol-gel, namely in the form of nitrates, as they dissolve easily, and their by-products decompose at relatively moderate temperatures in comparison with sulphates and chlorides, which need higher decomposition temperatures.
   The major disadvantage of using metal nitrate salts is their tendency to crystallise in an uncontrollable manner during the aging and drying processes, which negatively affects the homogeneity and the microstructure of the final product. When a large portion of water is extracted in an early stage during sol preparation, i.e. before gelling then the crystallisation can be avoided.
*iii) Catalyst* the type of catalyst used dramatically affects the final properties, such as porosity, optical, and structural properties. The selection of the catalyst depends on the desired properties of the final product. Acids or basic catalysts facilitate the hydrolysis of alkoxides. These reactions can be promoted by increasing the H₂O/Si ratio to some extent under acidic conditions. Also, pH plays crucial role in hydrolysis and condensation. Often, hydrolysis and condensation reactions do not depend on the type of catalyst used but are strongly dependent on the pH of the solution. Both acid and base catalysts could be used.

The inorganic acids such as sulphuric acid, hydrochloric acid and nitric acid being strong acids are the most commonly used as catalysts. They trigger the hydrolysis reaction in a very short time (a few minutes).

The increase of inorganic acids concentration in the sample is the major drawback of using them as catalysts, because they need higher temperatures for the elimination of their by-products. However, the increase in the calcination temperature to eliminate these residuals readily converts glasses into glass ceramics. When replacing strong inorganic acids (-0.5-2 mol L⁻¹) by lower quantities of weak organic acids (0.5-50 mmol L⁻¹) in order to reduce inorganic acid concentration, synthesis of 45S5 bioactive glass-ceramic was successfully achieved using citric acid as catalyst.

*iv) Aging and drying* - the sol-gel method requires extra-long drying and aging times, extended beyond a month in some cases. Aging and drying procedures are the most time-consuming stages and the major disadvantages in sol-gel process, which limits its use in both research and commercial applications. Many attempts have been made to produce glasses using different aging and drying times typically taking 10 to 15 days being 5 days considered a fast aging and drying process. It was reported that increasing aging times are often accompanied by a noticeable increase in crystallisation and a decrease in bioactivity.

Even when recent techniques enable high reduction in aging & drying time, still the calcination of the glass at elevated temperatures are needed to eliminate the nitrates residuals. The elevated temperatures for calcination tend to uncontrolled crystallisation and transformation the glass into glass ceramics.The document CN 107 352 807 and the document "Clove and cinnamon: Novel anti-oxidant fuels for preparing magnetic iron oxide particles by the sol-gel auto-ignition method" Ben-arfa Basam et al. suggest auto-combustion methods to save time and energy.

To overcome the drawbacks of the above-mentioned methods, the present invention provides a process for producing glass powders, in particular a process for producing bioactive glass powders with improved properties, comprising a step of auto-combustion sol-gel of the glass precursors. Said process tends to exclude the calcination step and enables saving time and energy to produce highly bioactive glass with almost no crystallisation phases.

### DESCRIPTION OF THE FIGURES

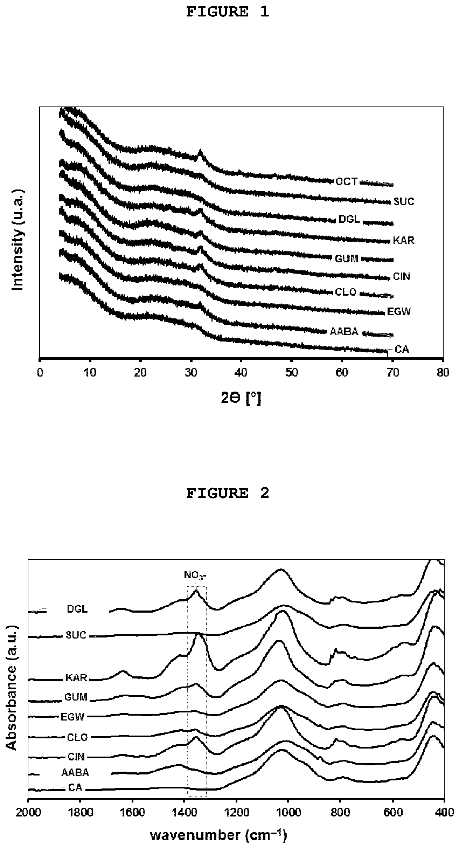

**Figure 1****:** XRD difractogram for the obtained glasses where it is possible to observe that mostly all the glasses exhibit amorphous behaviour, especially in the case where CA, EGW, DGL, and SUC were used.
**Figure 2****:** FTIR spectra for the obtained glasses confirming the elimination of the toxic nitrate group (NO3⁻) in the samples where SUC ,EGW ,CLO , AABA and CA were used ,while trace quantities were observed for the rest of samples.
**Figure 3****:** ²⁹Si MAS-NMR spectra for CA glass before SBF immersion presenting MAS-NMR spectra for the sample prepared by using citric acid and with calcination temperature of 200°C, 350°C and 550°C. The spectra confirms no shift in the MAS-NMR peaks, which means that the three samples exhibit similar glass network connectivity and 200 °C is quite enough to stabilise the glass powder.
**Figure 4****:** Cell viability assays of Vero cells. The dashed line represents the cut-off of 300 of reduction of cell viability (according to ISO 10993-5, the test item is considered non-cytotoxic if the percentage of viable cell is equal to or greater than 700 of the untreated control).

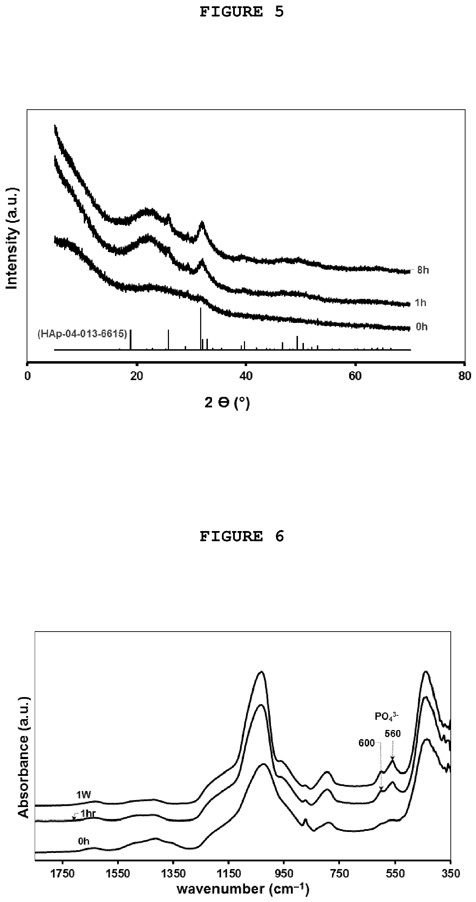

**Figure 5****:** XRD difractogram for glass synthesised by using CA after SBF immersion. The low calcination temperature (200°C) produces glass with high porosity which in turn increase the rate of bioactivity. The glass powder exhibit bioactivity after 1h of immersion in SBF. This can be confirmed by XRD Figure (5) .
**Figure 6****:** FTIR spectra for glass obtained by using CA after SBF immersion, showing significant increase in the intensity of the twin peaks at ~ 550 and 600 cm⁻¹ for phosphate group, which attribute the precipitation of hydroxyapatite, as shown in FTIR spectra.

### DESCRIPTION

The present invention relates to a process for producing glass powder and to products comprising said powders.

This process proposes a single step of auto-combustion allowing in most of the cases to avoid a further step of calcination. The glass powders thus obtained present high porosity and biocompatibility, which is a desired property for use in bioactive glass powders applications.

For that purpose, synthesis of bioactive glass (pure glass) based on the formulation of 4-components of a glass system silica (Si), calcium (Ca), sodium (Na) and phosphorous (P) is performed by an auto combustion method.

### Glass precursors

The following compounds are used as precursors of the above-mentioned elements:
- Tetraethyl orthosilicate (TEOS) as a precursor of silica,
- Triethyl phosphate (TEP) as precursor of phosphorous,
- Calcium nitrate (CaN) as source of calcium, and
- Sodium nitrate (NaN) as a source of sodium.

### Oxidant compounds

Nitrate salts are used as preferred oxidants. Other well-known compounds in the art can be also used in the scope of the invention. Preferred compounds are sodium nitrate and/or calcium nitrate.

### Fuel compounds

Different types of fuels can be used for combusting nitrates. Also here, well-known compounds either of inorganic or organic nature such as citric acid (CA), Sucrose (SUC), D+ Glucose (DGL) are comprised in the scope of the invention.

However, other components can be used as fuel as well, such as egg whites from chicken or other birds (EGW), Gum Karaya (KAR), gum rosin (GUM), alginic acid from sea sources, namely from brown algae (AABA), cinnamon (CIN) obtained from the inner bark of several tree species, amongst others.

Therefore, the following sources of nitrate salts, and mixtures thereof are used preferably in the scope of the invention:
- Citric acid (CA);
- Egg whites from chicken (EGW);
- Gum Karaya (KAR);
- Alginic acid from brown algae;(AABA)
- Sucrose;(SUC)
- D+Glucose; (DGL)
- Clove;(CLO)
- Cinnamon;(CIN)
- Gum rosin (GUM).

### Catalysts

Citric acid and nitric acid are the selected catalysts in the scope of the present invention.

### Glass-system

The glass system of the invention can be prepared by sequential addition of TEOS and TEP to an aqueous solution of an acid catalyst under stirring conditions until a clear solution is obtained. Then, NaN and CaN are sequentially added to said solution.

### Auto-combustion

The auto-combustion solution is prepared by addition of a given fuel component to the glass-system solution prepared as above. This solution is in a first step stirred for a short period (approx. 10m) at room temperature (approx. 20-25°C) followed by setting the temperature to a value of 85 to 95°C, preferably of 87 to 92°C, more preferably of approx. 90°C. As soon as the solution starts to become highly viscous, i.e. after ~30 minutes of stirring, the stirring rod can be removed.

Setting the temperature to a value of 85 to 95°C, preferably of 87 to 92°C, more preferably of approx. 90°C initiates the auto-combustion process. This process is then allowed to develop during approx. 10 minutes.

To ensure a complete combustion and in particular to remove toxic residues that can eventually be left by the oxidizing step, the obtained glasses samples can be subjected to a heat treatment at relatively low temperature of 150 to 350°C, more preferably of 175 to 300°C, even more preferably of 200 to 300°C for approximately 1 to 2h.

After this, fluffy granules of glass are obtained. These granules can be used directly or milled according to known processes to be used as glass powder in biomedical applications.

### Bioglass analysis

Glass granules obtained according to the present invention were milled and sieved in 65 µm mesh and characterised as follwing:
- X-Ray diffraction (XRD) to confirm the amorhous glassy phase ,
   - Fourier transform infra-red spectroscopy (FTIR) to verify the extraction of by-products such as nitrate group,
   - Solid-state Magical Angle Spinning Nuclear Magnetic Resonance spectroscopy (MAS-NMR) used to compare the microstructure of three citric acid glass samples, namely:
      a) Without a calcination / heat-treatment step;
      b) With calcination step at the above-mentioned temperatures; and
      c) With a calcination step at 550 °C,
   - M&M: Cytotoxicity assays using Vero Cells to assess cell viability/ biocompatibility of the glass powder prepared by citric acid fuel route,
   - Bioactivity was assessed for citric acid fuel route.

It was possible to observe that at these low temperatures, namely of 150 to 350°C, more preferably of 175 to 300°C, even more preferably of 200 to 300°C, and for approximately 1 to 2h the glass thus obtained shows similar network connectivity profile as the ones obtained with the conventional heat treatment at higher temperatures.

In particular, glass powders present cell viability at a concentration up to 0.1 mg.ml⁻¹ of cell media.

Moreover, glass powders of the invention show hydroxyapatite (HAp) precipitation after 1 hour of immersion in simulated body fluid (SBF).

### EXAMPLES

### Example 1. Preparation of mixtures of precursors

In order to obtain bioactive glass based in a 4-component system (Si, P, Ca and Na), nine samples comprising the same composition of glass precursors were prepared according to the following procedures.

Each sample was prepared by using different fuel to eliminate nitrates as by-products of synthesis, according to Table 1.

Citric acid was used as catalyst & fuel (Sample # 1). Nitric acid was used as catalyst with all other fuels.

**Table 1. Composition of the tested samples**

| **SAMPLE ID** | **FUEL SOURCE** | **AMOUNT (g)** | **CATALYST** | **AMOUNT** |
|---|---|---|---|---|
| 1 | Citric acid | 2.75-4.58 | Citric acid | - |
| 2 | Egg whites | 1.0 | Nitric acid | 0.05M |
| 3 | Gum Karaya | 0.5 | Nitric acid | 0.05M |
| 4 | Alginic acid | 1.0 | Nitric acid | 0.05M |
| 5 | Sucrose | 2.0 | Nitric acid | 0.05M |
| 6 | D+Glucose | 2.0 | Nitric acid | 0.05M |
| 7 | Clove | 1.0 | Nitric acid | 0.05M |
| 8 | Cinnamon | 1.0 | Nitric acid | 0.05M |
| 9 | Gum rosin | 0.5 | Nitric acid | 0.05M |

TEOS and TEP were sequentially added to the aqueous solution of acid catalyst and kept stirring until obtaining a clear sol.

NaN and CaN were sequentially added to the clear solution with 10min interval.

Other fuels rather than citric acid were added after CaN. The solutions were then stirred for approx. 10 min at room temperature (~20-25°C) followed by setting the temperature to a value of approx. 90°C while stirring. As soon as the solution started to become highly viscous, the stirring rod was removed, i.e. after +/- 30 minutes.

### Example 2. Combustion process

The combustion process lasted for approx. 10 minutes at a temperature of approx. 90°C and granules of glass were obtained.

### Example 3. Calcination

In order to ensure the complete removal of all residues of nitrates, the glass samples of the previous example were transferred to an oven at temperature of 200°C for approx. 1-2h.

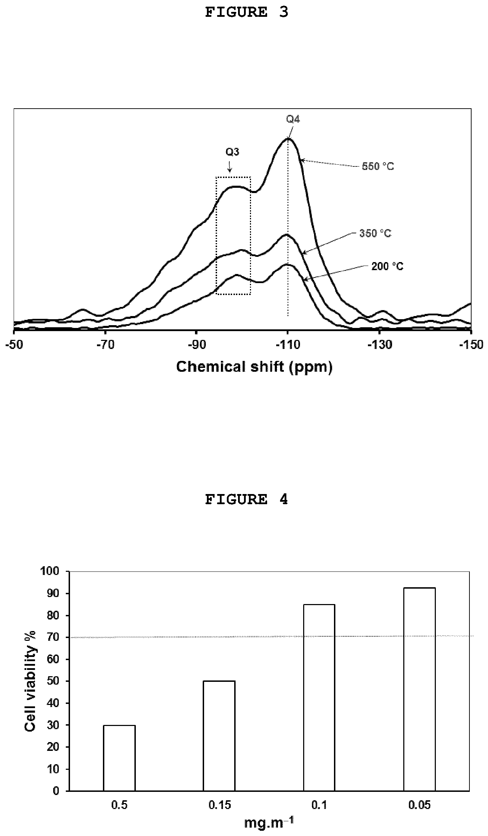

For comparative purposes of network connectivity, two of the samples were subjected to calcination temperatures of 350°C, and 550°C for approx. 1-2h, and a third sample was subjected to calcination at 200°C. Results were analysed using ²⁹S MAS-NMR (Fig.3).

Samples were milled and sieved in 65 µm mesh for further analysis.

### Example 4. X-Ray diffraction (XRD)

Crystalline/amorphous phases of the glass powder samples were determined by X-ray diffraction (XRD, PANalytical XPERT-PRO Diffractometer system), using Cu-KOG radiation (Kα = 1.54059), with 2Θ varying from 6 to 70° in steps of 0.026 s⁻¹.

### Example 5 . Fourier transform infra-red spectroscopy (FTIR)

Infrared absorbance spectra of the glass powders were obtained using a Fourier Transform Infrared Spectrometer (FTIR, Tensor 27, Bruker, Germany) in the range of 350-2000 cm⁻¹, with 128 Scans and 4 cm⁻¹ resolution.

### Example 6. MAS-NMR spectroscopy

²⁹Si MAS-NMR spectra was recorded for glass powders on Solid-state Magical Angle Spinning Nuclear Magnetic Resonance spectrometer (MAS-NMR) (Bruker Avance 400) operating at 79.48 MHz (9.4 T) using a 7 mm probe at a spinning rate of 5 kHz. The pulse length was 4.5 µs with 60 s delay time, and kaolinite was used as a chemical shift reference.

### Example 7. Cytotoxicity assays

Cell viability assays are shown in Figure (4), the cells were cultured with decreasing concentrations of bioactive glass materials. Experiments were performed with eight replicates and cell viability was expressed as a percentage relative to the untreated control cells. Error bars indicate the standard errors of the means. The dashed line represents the cut-off of 300 of reduction of cell viability (according to ISO 10993-5, the test item is considered non-cytotoxic if the percentage of viable cell is equal to or greater than 700 of the untreated control).

### Example 8. Bioactivity

The in vitro bioactivity assessment in simulated body fluid (SBF) was performed by immersion of 75mg of glass powders in 50mL of SBF solution at 37 °C, using sealed plastic flasks. The flasks were immediately placed in an incubator at 37 ± 0.5 °C in an orbital shaker agitating at 120rpm for 2 different time periods: 1h, and 8 h.

At each time point, the powder was collected by ultra-centrifuging (Beckman model LB-70M) the mixture under vacuum at 10, 000 rpm for 30 min. The separated powders were washed with deionised water and acetone, and then dried overnight at 37°C to be compared with the non-immersed powder in SBF and to be characterised by FTIR, & XRD to confirm the bioactivity.

Hydroxyapatite (HAp) was precipitated on glass surface after 1 hour of powder immersion in simulated body fluid (SBF). This reflects the high rate of bioactivity of these glasses. The low synthesis temperature (200°C) produces glass with high porosity which in turn increase the rate of bioactivity.

This can be confirmed by XRD Figure (5). These results are supported by the significant increase in the intensity of the twin peaks at ~ 550 and 600 cm⁻¹ for phosphate group as shown in FTIR spectra Figure (6).

## Claims

1. A process for producing bioactive glass **characterized by** comprising the following steps:
a) Providing a glass-system solution of silica (Si), calcium (Ca), sodium (Na) and phosphorous (P) having an adequate glass precursor of these elements that are respectively:
- Tetraethyl orthosilicate (TEOS) as a precursor of silica,
- Triethyl phosphate (TEP) as precursor of phosphorous,
- Calcium nitrate (CaN) as source of calcium, and
- Sodium nitrate (NaN) as a source of sodium,
an oxidant compound that is a nitrate salt, preferably sodium nitrate and calcium nitrate,
and citric acid or nitric acid as catalyst,
b) Adding a fuel component to the solution of (a) under stirring conditions, for 10m, at a temperature of 20-25°C, wherein said fuel component is selected from:
- Citric acid (CA);
- Egg whites from chicken (EGW);
- Gum Karaya (KAR);
- Alginic acid from brown algae;(AABA)
- Sucrose;(SUC)
- D+Glucose;DGL)
- Clove;(CLO)
- Cinnamon;(CIN)
- Gum rosin (GUM);
c) Setting the temperature of the solution of (b) to a value of 85 to 95°C, preferably of 87 to 92°C, more preferably of 90°C, and
d) Maintaining said temperature for approx. 10 minutes, until the combustion is completed.

2. A process according to claim 1 **characterized by** subjecting the obtained bioactive glass of step (d) to an additional step of heat-treatment, wherein the temperature is of 150 to 350°C, more preferably of 175 to 300°C, even more preferably of 200 to 300°C for 1 to 2h.

3. A process according to any of the claims 1 or 2 **characterized by** citric acid being the only catalyst and fuel, in a combined function.

4. A process according to any of the claims 1 or 2 **characterized by** nitric acid being the catalyst when other fuels are used rather than citric acid.

5. A process according to any of the claims 1 to 4 **characterized by** comprising a step of reducing the obtained bioactive glass into granules or powder.

## Patentansprüche

1. Ein Verfahren zur Herstellung von bioaktivem Glas, **dadurch gekennzeichnet, dass** es die folgenden Schritte umfasst:
a) Bereitstellen einer Glassystem-Lösung aus Siliziumdioxid (Si), Kalzium (Ca), Natrium (Na) und Phosphor (P) mit einem geeigneten Glasvorprodukt aus diesen Elementen, bei denen es sich jeweils handelt um:
- Tetraethylorthosilicat (TEOS) als ein Vorprodukt von Kieselsäure,
- Triethylphosphat (TEP) als Vorläufer von Phosphor,
- Calziumnitrat (CaN) als Quelle für Kalzium, und
- Natriumnitrat (NaN) als eine Quelle für Natrium,
ein Oxidationsmittel in Form eines Nitratsalzes, bevorzugt Natriumnitrat und Calciumnitrat,
sowie Zitronensäure oder Salpetersäure als Katalysator,
b) Zugabe einer Kraftstoffkomponente zu der Lösung von (a) unter ständigem Rühren während 10 Min. bei einer Temperatur von 20-25 °C, wobei die genannte Kraftstoffkomponente ausgewählt ist aus:
- Zitronensäure (CA);
- Eiweiß vom Huhn (EGW);
- Karaya (KAR);
- Alginsäure aus Braunalgen; (AABA)
- Saccharose; (SUC)
- D+Glucose; (DGL)
- Gewürznelke; (CLO)
- Zimt; (CIN)
- Kolophonium (GUM);
c) Einstellen der Temperatur der Lösung von (b) auf einen Wert von 85 bis 95 °C, bevorzugt von 87 bis 92 °C, besonders bevorzugt von 90 °C, und
d) Halten der genannten Temperatur für ungefähr 10 Minuten, bis die Verbrennung abgeschlossen ist.

2. Ein Verfahren nach Anspruch 1, **dadurch gekennzeichnet, dass** das erhaltene bioaktive Glas aus Schritt (d) einem zusätzlichen Schritt einer Wärmebehandlung unterzogen wird, wobei die Temperatur 150 bis 350 °C, besonders bevorzugt 175 bis 300 °C, noch bevorzugter 200 bis 300 °C für 1 bis 2 Stunden beträgt.

3. Ein Verfahren nach einem der Ansprüche 1 oder 2, **dadurch gekennzeichnet, dass** Zitronensäure in einer kombinierten Funktion der einzige Katalysator und Kraftstoff ist.

4. Ein Verfahren nach einem der Ansprüche 1 oder 2, **dadurch gekennzeichnet, dass** Salpetersäure der Katalysator ist, wenn andere Kraftstoffe anstelle von Zitronensäure verwendet werden.

5. Ein Verfahren nach einem der Ansprüche 1 bis 4, **dadurch gekennzeichnet, dass** es einen Schritt des Zerkleinerns des erhaltenen bioaktiven Glases zu Granulat oder Pulver umfasst.

## Revendications

1. Un procédé de production de verre bioactif **caractérisé en ce qu'**il comprend les étapes suivantes :
a) Fournir une solution de système de verre de silice (Si), calcium (Ca), sodium (Na) et phosphore (P) ayant un précurseur de verre adéquat de ces éléments qui sont respectivement :
- Orthosilicate de tétraéthyle (TEOS) en tant que précurseur de silice,
- Phosphate de triéthyle (TEP) en tant que précurseur de phosphore,
- Nitrate de calcium (CaN) en tant que source de calcium, et
- Nitrate de sodium (NaN) en tant que source de sodium,
un composé oxydant qui est un sel de nitrate, préférablement du nitrate de sodium et nitrate de calcium,
et de l'acide citrique ou acide nitrique en tant que catalyseur,
b) Ajouter un composant de combustible à la solution de (a) dans des conditions d'agitation, durant 10m, à une température de 20-25°C, dans lequel ledit composant de combustible est sélectionné à partir de :
- Acide citrique (CA) ;
- Blanc d'oeufs de poule (EGW) ;
- Gomme karaya (KAR) ;
- Acide alginique issu d'algues brunes ; (AABA)
- Saccharose ; (SUC)
- D+Glucose ; (DGL)
- Clou de girofle ; (CLO)
- Cannelle ; (CIN)
- Gomme-résine (GUM) ;
c) Régler la température de la solution de (b) à une valeur allant de 85 à 95°C, préférablement de 87 à 92°C, plus préférablement de 90°C, et
d) Maintenir ladite température durant près de 10 minutes jusqu'à ce que la combustion soit complète.

2. Un procédé selon la revendication 1 **caractérisé en ce que** le verre bioactif obtenu de l'étape (d) est soumis à une étape supplémentaire de traitement thermique, dans lequel la température est de 150 à 350°C, plus préférablement de 175 à 300°C, encore plus préférablement de 200 à 300°C pendant 1 à 2h.

3. Un procédé selon l'une quelconque des revendications 1 ou 2 **caractérisé en ce que** l'acide citrique est le seul catalyseur et combustible, en une fonction combinée.

4. Un procédé selon l'une quelconque des revendications 1 ou 2 **caractérisé en ce que** l'acide nitrique est le catalyseur lorsque d'autres combustibles sont utilisés au lieu de l'acide citrique.

5. Un procédé selon l'une quelconque des revendications 1 à 4 **caractérisé en ce qu'**il comprend une étape de réduire le verre bioactif obtenu en granulés ou en poudre.
